# EUROPÄISCHE PATENTSCHRIFT

(11) **EP 2 851 589 B1**
(45) Veröffentlichungstag und Bekanntmachung des Hinweises auf die Patenterteilung: **29.03.2017**
(21) Anmeldenummer: 14182563.8
(22) Anmeldetag: 28.08.2014
(51) Int. Cl.: F16K 15/02, F24H 1/18, F24D 3/10, F16K 17/04, F28D 20/00

(54) **Durchflussregeleinrichtung und Wasserspeicher**
Flow regulating device and water storage tank
Dispositif de régulation de débit et chauffe-eau

(30) Priorität: 23.09.2013 DE 102013219086
(43) Veröffentlichungstag der Anmeldung: 25.03.2015
(73) Patentinhaber: BSH Hausgeräte GmbH, 81739 München (DE)
(72) Erfinder: Radl, Mathias, 83374 Oderberg (DE); Loser, Florian, 83022 Rosenheim (DE); Gruber, Michael, 83362 Surberg (DE)

(56) Entgegenhaltungen:
- EP-A2- 0 308 618
- DE-A1-102012 003 505
- DE-U1-202007 006 907
- US-A- 1 896 706
- US-A- 2 730 125
- US-A- 3 463 185
- US-A- 5 332 000
- US-A1- 2002 079 000

## Beschreibung

Die Erfindung betrifft eine Durchflussregeleinrichtung nach dem Oberbegriff des Patentanspruchs 1 und einen Wasserspeicher für den häuslichen Gebrauch, wobei die Durchflussregeleinrichtung einen Ventilabschnitt zum Auf- und Zusteuern eines Strömungskanals hat, in dem ein länglicher Ventilkörper in Längsrichtung zwischen einem Kanaleinlauf und einem Kanalauslauf verschiebbar geführt ist und der in Schließrichtung federvorgespannt ist.

Derartige Durchflussregeleinrichtungen sind regelmäßig bei modernen Kleinspeichern, wie Wasserspeichern und insbesondere drucklosen Warmwasserspeichern im häuslichen Gebrauch installiert. Eine bekannte Durchflussregeleinrichtung hat einen Leitungsabschnitt mit einem festen Öffnungsquerschnitt, durch den eine definierte Durchflussmenge in einen Gerätetank einströmen kann. Um bei Bedarf eine Durchflussmenge zu ermöglichen, die über der Durchflussmenge des Leitungsabschnittes hinausgeht, ist parallel zum Leitungsabschnitt ein Ventilabschnitt geschaltet, der in Kombination mit dem Leitungsabschnitt einen maximalen Zulaufquerschnitt definiert. Ab einer voreingestellten Durchflussmenge öffnet der Ventilabschnitt durch den an ihn in Öffnungsrichtung anliegenden Wasserdruck, so dass zusätzlich zum Leitungsabschnitt durch den Ventilabschnitt Kaltwasser in den Gerätetank einströmt. In dem Ventilabschnitt ist ein länglicher Ventilkörper in Längsrichtung zwischen einem Kanaleinlauf und einem Kanalauslauf verschiebbar geführt und in Schließrichtung federvorgespannt. In Öffnungsstellung wird der Ventilkörper von dem einströmenden Kaltwasser umströmt, wodurch dieser zu Schwingung in Querrichtung angeregt wird, was zu Schwingungsgeräuschen führt.

Die Druckschrift DE 10 2012 003 505 A1 offenbart ein Ventil zur Steuerung eines Fluidstroms, wobei das Ventil eine Spiralfeder aufweist, die sich an einer schrägen Gehäuesefläche abstützt und ein Ventilschließelement entlang einer axialen Richtung vorspannt, In Öffnungsstellung wird das Ventilschließelement in radialer Richtung gegen ein angrenzendes Gehäuseelement gedrückt. Aus der Druckschrift EP 0308 618 A2 ist ein Rückschlagventil mit einer Spiralfeder bekannt, die so angeordnet ist, dass ihre Kraftwirklinie versetzt oder geneigt zur Längsachse des Ventilkörpers verläuft. Weitere Ventileinrichtungen sind in der DE 20 2007 006907 U1, US 2002/079000 A1, US 1 896 706 A, US 5 332 000 A und der US 3 463 185 A gezeigt

Aufgabe der Erfindung ist es, eine Durchflussregeleinrichtung zu schaffen, die die vorgenannten Nachteile beseitigt und bei der Schwingungsgeräusche unterbunden sind. Des Weiteren ist es Aufgabe der Erfindung, einen geräuscharmen Wasserspeicher für den häuslichen Gebrauch zu schaffen.

Diese Aufgabe wird gelöst durch eine Durchflussregeleinrichtung mit den Merkmalen des Patentanspruchs 1 und durch einen Wasserspeicher mit den Merkmalen des Patentanspruchs 9. Vorteilhafte Aus- und Weiterbildungen, welche einzeln oder in Kombination miteinander eingesetzt werden können, sind Gegenstand der abhängigen Ansprüche.

Eine erfindungsgemäße Durchflussregeleinrichtung hat einen Ventilabschnitt zum Aufund Zusteuern eines Strömungskanals, in dem ein länglicher Ventilkörper in Längsrichtung zwischen einem Kanaleinlauf und einem Kanalauslauf verschiebbar geführt ist und der in Schließrichtung federvorgespannt ist. Erfindungsgemäß greift ein Federelement zur Erzeugung der Vorspannung asymmetrisch an den Ventilkörper an, wobei der Ventilkörper in Öffnungsstellung in Querrichtung gegen einen Anschlag auslenkbar ist. Das Federelement ist eine Spiralfeder, die einen Schaft des Ventilkörpers umgreift und sich an einer den Kanalauslauf umgebenden Ringfläche abstützt. Eine derartige Ventilkörper-Federelement-Anordnung ist robust und somit wartungsarm. Die asymmetrische Vorspannung bzw. Federanlage des Federelementes an dem Ventilkörper ist dadurch einfach ausgebildet, dass dieser zum Angreifen des Federelementes eine Federanlagefläche hat, die sich radial über einen Teilumfang des Schaftes erstreckt. Die Federanlagefläche ist somit hier eine in Strömungsrichtung weisende Federanlagefläche, die eine verlässliche asymmetrische Vorspannung ermöglicht. Um eine seitliche Ausweichmöglichkeit des Federelementes in Öffnungsstellung des Ventilkörpers zu ermöglichen, ist der Schaft in einem Außenumfangsbereich stromabwärts der Federanlagefläche querschnittsreduziert. Die Querschnittsreduzierung ermöglicht eine Bauchbildung bzw. ein "Wegknicken" des Federelements und insbesondere der Spiralfeder in Öffnungsstellung des Ventilkörpers bzw. bei Stauchung.

Die asymmetrische Vorspannung des Ventilkörpers in seiner Öffnungsstellung in Kombination mit der in Querrichtung spielbehafteten Führung führt bei einer an dem Ventilkörper in Öffnungsrichtung anliegenden ausreichend großen Wasserkraft zu einer resultierenden Öffnungskraft, die nicht nur parallel zur Längsachse des Ventilkörpers gerichtet ist, sondern eine Komponente quer zum Ventilkörper aufweist. Diese Querkraft drückt den Ventilkörper definiert aus der Mitte des Strömungskanals, bis dieser sich in Anlage an dem seitlichen gehäuseseitigen Anschlag befindet. Durch die seitliche Anlage ist der Ventilkörper in Querrichtung fixiert und kann nicht mehr zu Querschwingungen angeregt werden. Folglich wird das Ausbilden von Schwingungsgeräuschen wirkungsvoll verhindert. Die erfindungsgemäße Durchflussregeleinrichtung kann beispielweise bei Kleinspeichern der Hausgerätetechnik und insbesondere auch bei Kaffevollautomaten eingesetzt werden. Bei Kaffeevollautomaten kann sie die Funktion eines Überdruckventils oder eines Druckregelventils übernehmen, das beim Überschreiten eines bestimmten Wasserdrucks eine Leitung im Fluidsystem öffnet. Damit kann z.B. eine Zuleitung zum Brühraum geöffnet und somit der Brühvorgang gestartet oder ein Ausgang des Brühraumes geöffnet und somit der Brühdruck konstant gehalten werden.

Die Herstellung des Gehäuseabschnittes lässt sich vereinfachen, wenn der den Ventilkörper aufnehmende Gehäuseinnenraum zylindrisch ausgebildet ist. Hierdurch kann der Gehäuseinnenraum durch eine Bohrung einfach hergestellt werden oder einfach entformt werden.

Die Querschnittsreduzierung kann beispielsweise durch eine konkave Ausnehmung zwischen der Federanlagefläche und dem Fußabschnitt erreicht werden.

Eine großflächige Anlage des Ventilkörpers an dem Anschlag lässt sich dadurch erreichen, dass der Ventilkörper eine Anlagefläche hat, die in Schließstellung um einen maximalen Auslenkwinkel zum Anschlag angestellt ist.

Um eine Selbstzentrierung des Ventilkörpers in seiner Schließstellung zu erreichen, kann eine den Kanaleinlauf umgebende gehäuseseitige Ventilsitzfläche in Strömungsrichtung konisch erweitert sein. Hierdurch wird quasi ein Führungstrichter zum Rückbewegen des Ventilkörpers aus seiner ausgelenkten Querstellung in seine axiale Schließstellung geschaffen.

Alternativ ist zur Selbstzentrierung eine mit einer gehäuseseitigen Ventilsitzfläche zusammenwirkenden ventilkörperseitige Ringstirnfläche in Strömungsrichtung konisch erweitert sind. Bei einem weiteren Ausführungsbeispiel sind die Ventilsitzfläche und die Ringstirnfläche in Strömungsrichtung korrespondierend konisch erweitert.

Die Montage des Ventilabschnittes und insbesondere das Einsetzen des Ventilkörpers und des Federelementes in den Gehäuseinnenraum lässt bzw. lassen sich einfachen gestalten, wenn der Gehäuseabschnitt mehrteilig ausgebildet ist und der Kanalauslauf vom Kanaleinlauf trennbar ist.

Bei einem Ausführungsbeispiel hat die Durchflussregeleinrichtung einen Leitungsabschnitt mit einem festen Öffnungsquerschnitt, der parallel zum Ventilabschnitt angeordnet ist. Hierdurch wirkt der Ventilabschnitt als ein Bypassventil, das automatisch beim Überschreiten eines auf den Ventilschieber wirkenden Mindestwassersdrucks in Folge eines eine Durchflussmenge des Leitungsabschnitts übersteigenden Kaltwasserbedarfs öffnet.

Ein erfindungsgemäßer Wasserspeicher für den häuslichen Gebrauch ist mit einer erfindungsgemäßen Durchflussregeleinrichtung versehen. Ein derartiger Wasserspeicher zeichnet sich aufgrund des in seiner Öffnungsstellung in Querrichtung fixierten Ventilkörper durch einen leisen Betrieb aus.

Die Erfindung eignet sich insbesondere zur Bereitstellung eines Kleinspeichers für den häuslichen Gebrauch bzw. der Hausgerätetechnik und insbesondere zur Bereitstellung eines drucklosen Warmwasserspeichers oder eines Kaffeevollautomaten für den häuslichen Gebrauch bzw. der Hausgerätetechnik, der einen geräuscharmen Betrieb ermöglicht.

Im Folgenden wird ein bevorzugtes Ausführungsbeispiel der Erfindung anhand von stark vereinfachten schematischen Darstellungen näher erläutert. Es zeigen:
- Figur 1: einen Längsschnitt durch ein Ausführungsbeispiel einer erfindungsgemäßen Durchflussregeleinrichtung in Schließstellung, und
- Figur 2: die Durchflussregeleinrichtung nach Figur 1 in Öffnungsstellung.

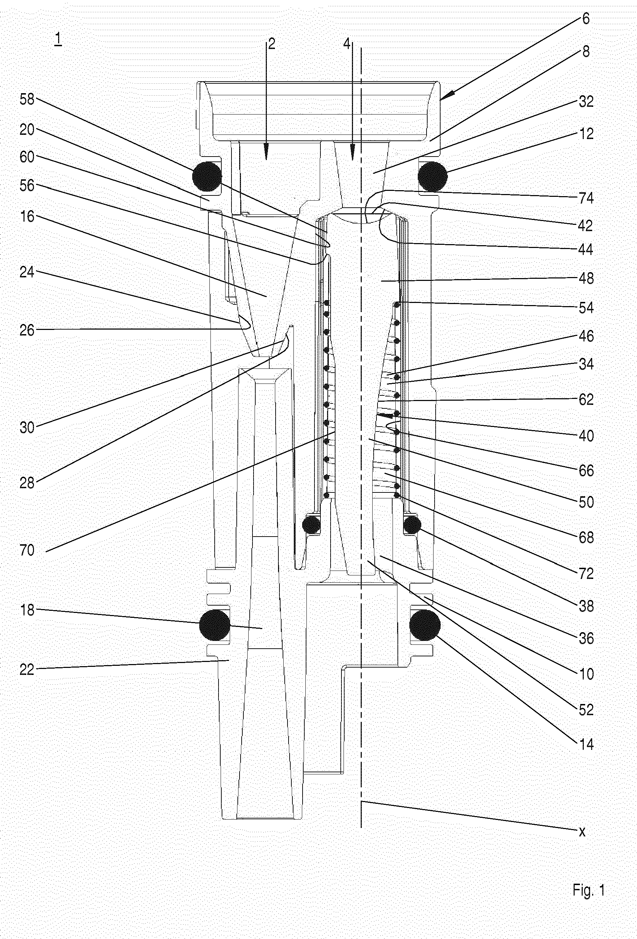

Gemäß der Darstellung in Figur 1 hat eine beispielhafte erfindungsgemäße Durchflussregeleinrichtung 1 einen Leitungsabschnitt 2 und einen parallel zum Leitungsabschnitt 2 geschalteten Ventilabschnitt 4. Die Durchflussregeleinrichtung 1 wird in einem Zulauf beispielsweise eines drucklosen Kleinspeichers wie ein Warmwasserspeicher der Hausgerätetechnik angeordnet und hat hierzu ein Gehäuse 6, das den Leitungsabschnitt 2 und der Ventilabschnitt 4 aufnimmt, und das ein in Strömungsrichtung der in den Kleinspeicher einströmenden Kaltwassers betrachtet einen vorderen Anschluss 8 und einen hinteren Anschluss 10 aufweist, auf den der Zulauf mit freien Endabschnitten geschoben werden kann. Zum Abdichten der Durchflussregeleinrichtung 1 im in den Zulauf eingesetzten Zustand ist in eine Außenumfangsnut des vorderen Anschlusses 8 und in eine Außenumfangsnut des hinteren Anschlusses 10 jeweils ein Dichtungsring 12, 14 angeordnet.

Der Leitungsabschnitt 2 ist hier als eine Venturidüse mit einem festen Öffnungsquerschnitt ausgebildet. Sie hat einen konischen Einlaufbereich 16 und einen konischen Auslaufbereich 18. Der Einlaufbereich 16 ist in Strömungsrichtung konisch verjüngt und in einem vorderen Gehäuseteil 20 des Gehäuses 6 angeordnet. Der Auslaufbereich 18 ist in Strömungsrichtung konisch erweitert und in einem hinteren Gehäuseteil 22 angeordnet. Der Einlaufbereich 16 und der Auslaufbereich 18 sind somit zwei spitzenseitig zueinander orientierte Trichter ausgebildet, wobei hier der Einlaufbereich 16 einen steileren Wandwinkel als der Auslaufbereich 18 hat. Längsrichtung der Durchflussregeleinrichtung 1 ist der Einlaufbereich 16 gegenüber dem Auslaufbereich 18 axial verkürzt. Mittels korrespondierenden Dichtflächen 24, 26 und 28, 30 sind die Gehäuseteile 20, 22 im Bereich des Leitungsabschnittes 1 gegeneinander abgedichtet.

Der Ventilabschnitt 4 bildet einen Bereich des vorderen Gehäuseteils 20 und einen Bereich des hinteren Gehäuseteils 22. Er hat einen ihn in Längsrichtung durchsetzenden Strömungskanal, der von einem Kanaleinlauf 32, einem Gehäuseinnenraum 34 und einem Kanalauslauf 36 gebildet ist.

Der Kanaleinlauf 32 ist im vorderen Gehäuseteil 20 angeordnet und in Strömungsrichtung und somit in Richtung des Gehäuseinnenraums 34 konisch verjüngt. Der Gehäuseinnenraum 34 ist ebenfalls im vorderen Gehäuseteil 20 angeordnet, hat jedoch eine zylindrische Umfangswandung. Der Kanalauslauf 32 ist im hinteren Gehäuseteil 22 angeordnet und ist hier ebenfalls zylindrisch ausgebildet. Zum gegenseitigen Abdichten der Gehäuseteile 20, 22 im Bereich des Ventilabschnittes 4 ist in einem, dem Kanalauslauf 36 radial außen umgebenden Ringraum zwischen den Gehäuseteilen 20, 22 ein Dichtungsring 38 eingespannt.

In dem Ventilabschnitt ist ein Ventilkörper 40 entlang einer sich in Längsrichtung des Ventilabschnitts erstreckenden Längsachse x verschiebbar geführt. In dem hier gezeigten Ausführungsbeispiel bilden der Kanaleinlauf 32, der Gehäuseinnenraum 34 und der Kanalauslauf 32 die Längsachse x. Zusätzlich zur axialen Verschiebung ist der Ventilkörper 40 in Öffnungsstellung in Querrichtung der Längsachse x auslenkbar. Der Ventilkörper 40 hat eine Ringstirnfläche 42, mit der er sich in Schließstellung in Anlage an einer den Kanaleinlauf 32 umgebenden Ventilsitzfläche 44 befindet. In dem hier gezeigten Ausführungsbeispiel ist die Ventilsitzfläche 44, die die Längsachse x koaxial umgreift, in Strömungsrichtung betrachtet konisch erweitert und die Ringstirnfläche 42 ist abgerundet. Über ein Federelement 46 ist der Ventilkörper 40 in Richtung seiner Schließstellung federvorgespannt.

Der Ventilkörper 40 hat eine längliche Gestalt mit einem in Strömungsrichtung betrachtet Kopfabschnitt 48, einem Schaft 50 und einem Fußabschnitt 52.

Der Kopfabschnitt 48 ist in Strömungsrichtung ausgehend von der Ringstirnfläche 42 konisch erweitert. Zur Ermöglichung einer Querbewegung des Ventilkörpers 40 in Öffnungsstellung ist der Kopfabschnitt 48 in Schließstellung radial von der Umfangswandung des Gehäuseinnenraums beabstandet.

Der Kopfabschnitt 48 wird in einem Umfangsbereich axial von einer in Strömungsrichtung weisenden Federanlagefläche 54 begrenzt. Die Federanlagefläche 54 erstreckt sich radial von dem bzw. zum Schaft 50 und umgreift lediglich einen Teilumfang des Ventilkörpers 40. Die Federanlagefläche 54 ist somit bogenartig. Zur asymmetrischen Vorspannung erstreckt sich die Federanlagefläche 54 vorzugsweise über einen Umfangbereich kleiner 180° Ein nicht von der Federanlagefläche 54 umgriffener Teilumfang ist gegenüber der Federanlagefläche 54 axial zurückgestuft, so dass ein zur Federanlagefläche 56 stromaufwärts liegende Bogenfläche 56 geschaffen wird, die hier zusammen mit der axial versetzten bogenartigen Federanlagefläche 54 einen Umfangswinkel von 360° umspannt.

Zwischen der Ringstirnfläche 42 und der Bogenfläche 56 ist eine Anlagefläche 58 zum Auflaufen auf einen gegenüberliegenden gehäuseseitigen Anschlag 60 bei einer Auslenkung des Ventilkörpers 40 in Öffnungsstellung gebildet. Der Anschlag 60 ist hier ein Abschnitt der Umfangswandung des Gehäuseinnenraums und somit als ein integraler Gehäuseanschlag ausgebildet. Selbstverständlich kann der Anschlag 60 auch als ein Einzelelement in eine entsprechende Gehäuseaufnahme eingesetzt sein. Bei einer maximalen Auslenkung liegt der Ventilkörper 40 mit der Anlagefläche 58 an dem Anschlag 60 an und ist somit in Querrichtung lagefixiert. Zur flächigen Anlage der Anlagefläche 58 an dem Anschlag 60 entspricht in Schließstellung ein Konuswinkel des Kopfabschnitts einem maximalen Auslenkwinkel des Ventilkörpers 40 zum Anschlag 60.

Der Schaft 50 ist in einem Außenumfangsbereich 62 zwischen der Federanlagefläche 54 und dem Fußabschnitt 52 gegenüber dem Kopfabschnitt 58 querschnittsreduziert bzw. verjüngt. Der Schaft 50 ist somit in dem Außenumfangsbereich 62 gegenüber einer zylindrischen Grundkontur konturiert. In dem hier gezeigten Ausführungsbeispiel hat der Außenumfangsbereich 62 eine konkave Außenfläche. Hierdurch wird zwischen einem dem Außenumfangsbereich 62 gegenüberliegenden Umfangswandungsabschnitt 66 ein Freiraum 68 geschaffen, der die Aufnahme eines sich in Öffnungsstellung bildenden Federbauches des Federelementes 46 ermöglicht.

Ein nicht von der Federanlagefläche 54 umgriffener Außenumfangsbereich 70 des Schaftes 50 kann im Vergleich zum Außenumfangsbereich 62 grundsätzlich unkonturiert ausgebildet sein. Selbstverständlich kann der Außenumfangsbereich 70 wie in Figur 1 gezeigt, ebenfalls in Richtung des Fußabschnittes 52 querschnittsreduziert ausgebildet sein. Die Querschnittsverjüngungen des Außenumfangsabschnitts 70 sind hier derart, dass der Schaft 50 beim Eintauchen in den Kanalauslauf 36 in Öffnungsstellung radial von dem Kanalauslauf beabstandet ist.

Der Fußabschnitt 52 bildet ein zum Kopfabschnitt 48 entgegengesetztes Ende des Ventilkörpers 40. In Schließstellung ist der Fußabschnitt 52 in dem Kanalauslauf 36 angeordnet und radial von einer Kanalwandung beabstandet. Im Übergangsbereich des Außenumfangsabschnitts 62 ist die konkave Außenfläche stufenlos über den Fußabschnitt 52 geführt. Im Übergangsbereich des Außenumfangsabschnitts 70 ist der Fußabschnitt 52 radial nach innen abgewinkelt.

Das Federelement 46 ist in dem hier gezeigten Ausführungsbeispiel eine Spiralfeder, die den Schaft 50 umgreift. Dabei stützt sie sich auf einer Ringfläche 72 ab, die den Kanalauslauf 36 umgibt und greift an der Federanlagefläche 54 an. Aufgrund der bogenartigen Ausbildung der Federanlagefläche 54 greift das Federelement 46 nicht über seinen gesamten Stirnumfang an dem Ventilkörper 40 an, sondern lediglich über einen Teilbereich bzw. Bogenbereich, so dass dieser nicht symmetrisch, sondern asymmetrisch in Schließrichtung vorgespannt wird.

Im Folgenden wird ein Betrieb der erfindungsgemäßen Durchflusseinrichtung 1 erläutert: Die Durchflusseinrichtung 1 ist in einen Zulauf beispielsweise eines Warmwasserspeichers eingesetzt und dabei fluiddicht mit freien Endabschnitten des Zulaufs verbunden. Der Ventilkörper 40 befindet sich in seiner in Figur 1 gezeigten Schließstellung, in der er mittels der Federkraft des Federelementes 46 mit seiner Ringstirnfläche 42 gegen die Ventilsitzfläche 44 vorgespannt ist.

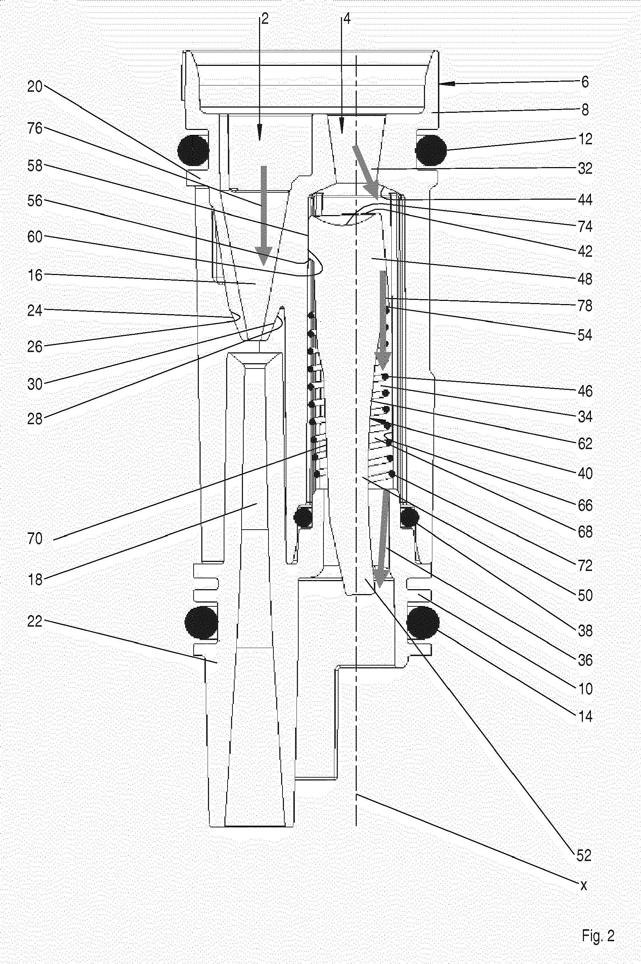

Beim Aufsteuern eines zulaufseitigen Sperrventils strömt Kaltwasser 76 durch den Leitungsabschnitt 2 in einen Wassertank des Warmwasserspeichers ein. Wenn nun durch einen an einer hier konkaven bzw. schalenartig ausgebildeten Anströmfläche 74 des Kopfabschnitts 48 anliegenden Wasserdruck die Federkraft überwunden wird und der Ventilkörper 40 aus seiner Schließstellung in seine in Figur 2 gezeigte Öffnungsstellung überführt wird, wird der Ventilabschnitt 4 aufgesteuert und es bildet sich ein Kaltwasserstrom 78 parallel zum Leitungsabschnitts 2 aus. Hierdurch wird die Durchflussmenge wesentlich gesteigert. Der notwendige als Öffnungsdruck wirkende Wasserdruck stellt sich insbesondere dann ein, wenn eine höhere Durchflussmenge gefordert wird, als die Durchflussmenge, die durch den festen Öffnungsquerschnitt des Leitungsabschnitts 2 einströmen kann.

Das Federelement 46 wird dabei quasi einseitig gestaucht und bildet durch den Freiraum 68 stromabwärts der Federanlagefläche 54 einen Federbauch aus. Das Federelement 46 knickt quasi weg. Stromabwärts der Bogenfläche 56 bleibt das Federelement 46 aufgrund der fehlenden Anlage mit der Bogenfläche 56 nahezu ungestaucht. Dies bewirkt eine asymmetrischen Vorspannung des Ventilkörpers 40, woraufhin dieser in seiner Öffnungsstellung mit einer Querkraft beaufschlagt wird. Die Querkraft lenkt den Ventilkörper 40 aus seiner axialen Lage auf der Längsachse x in Querrichtung, hier nach links, aus, bis er mit seiner Anlagefläche 58 auf den gehäuseseitigen Anschlag 60 aufläuft. Sobald der Ventilkörper 40 mit seiner Anlagefläche 58 an dem Anschlag 60 anliegt ist er in Querrichtung fixiert und kann nicht zu geräuschverursachenden Querschwingungen angeregt werden.

Wenn der auf den Ventilkörper 40 in Öffnungsrichtung wirkende Wasserdruck kleiner als die Federkraft wird, führt der Ventilkörper 40 eine Bewegung in Schließrichtung aus, wobei er aufgrund der in Schließrichtung konisch verjüngten Ventilsitzfläche 44 aus seiner Querauslenkung auf der Längsachse x selbstzentriert wird (Figur 1).

Offenbart ist eine Durchflussregeleinrichtung mit einem Ventilabschnitt zum Auf- und Zusteuern eines Strömungskanals, in dem ein länglicher Ventilkörper in Längsrichtung zwischen einem Kanaleinlauf und einem Kanalauslauf verschiebbar geführt ist und der in Schließrichtung federvorgespannt ist, wobei ein Federelement zur Erzeugung der Vorspannung asymmetrisch an den Ventilkörper angreift und dieser in Öffnungsstellung in Querrichtung auslenkbar ist, wobei eine Maximalauslenkung durch eine Anlage des Ventilkörpers an einem Anschlag begrenzt ist, sowie ein Wasserspeicher.

### Bezugszeichenliste

- 1: Durchflussregeleinrichtung
- 2: Leitungsabschnitt
- 4: Ventilabschnitt
- 6: Gehäuse
- 8: vorderen Anschluss
- 10: hinteren Anschluss
- 12: Dichtungsring
- 14: Dichtungsring
- 16: Einlaufbereich
- 18: Auslaufbereich
- 20: vorderer Gehäuseteil
- 22: hinteres Gehäusteil
- 24: Dichtfläche
- 26: Dichtfläche
- 28: Dichtfäche
- 30: Dichfläche
- 32: Kanaleinlauf
- 34: Gehäuseinnenraum
- 36: Kanalauslauf
- 38: Dichtungsring
- 40: Ventilkörper
- 42: Ringstirnfläche
- 44: Ventilsitzfläche
- 46: Federelement
- 48: Kopfabschnitt
- 50: Schaft
- 52: Fußabschnitt
- 54: Federanlagefläche
- 56: Bogenfläche
- 58: Anlagefläche
- 60: Anschlag
- 62: Außenumfangsbereich
- 66: Innenwandungsbereich
- 68: Freiraum
- 70: Außenumfangsbereich
- 72: Ringfläche
- 74: Anströmfläche
- 76: Kaltwasser
- 78: Kaltwasserstrom

- x: Längsachse Pfeile

## Patentansprüche

1. Durchflussregeleinrichtung (1) mit einem Ventilabschnitt (4) zum Auf- und Zusteuern eines Strömungskanals, in dem ein länglicher Ventilkörper (40) in Längsrichtung zwischen einem Kanaleinlauf (32) und einem Kanalauslauf (36) verschiebbar geführt ist, wobei der Ventilkörper (40) in Strömungsrichtung einen Kopfabschnitt (48), einen Schaft (50) und einen Fußabschnitt (52) hat, und wobei der Ventilkörper (40) in Schließrichtung federvorgespannt ist, wobei ein Federelement (46) zur Erzeugung der Vorspannung asymmetrisch an dem Ventilkörper (40) angreift, wobei der Ventilkörper (40) in Öffnungsstellung in Querrichtung gegen einen Anschlag (60) auslenkbar ist, wobei das Federelement (46) eine Spiralfeder ist, die einen Schaft (50) des Ventilkörpers (40) umgreift, **dadurch gekennzeichnet dass** das Federelement (46) sich an einer den Kanalauslauf (36) umgebenden Ringfläche (72) abstützt, wobei sich radial vom Schaft (50) über einen Teilumfang eine Federanlagefläche (54) erstreckt und der Schaft (50) in einem Außenumfangsbereich (62) stromabwärts der Federanlagefläche (54) querschnittsreduziert ist.

2. Durchflussregeleinrichtung nach Anspruch 1, wobei ein den Ventilkörper (40) aufnehmender Gehäuseinnenraum (34) zylindrisch ist.

3. Durchflussregeleinrichtung nach Anspruch 1 oder 2, wobei der Schaft (50) in seinem querschnittsreduzierten Außenumfangsbereich (62) eine konkave Anlagefläche hat.

4. Durchflussregeleinrichtung nach einem der Ansprüche 1, 2 oder 3, wobei der Ventilkörper (40) eine Anlagefläche (58) hat, die in Schließstellung um einen maximalen Auslenkwinkel zum Anschlag (60) angestellt ist.

5. Durchflussregeleinrichtung nach einem der vorhergehenden Ansprüche, wobei eine den Kanaleinlauf (30) umgebende gehäuseseitige Ventilsitzfläche (44) in Strömungsrichtung konisch erweitert sind.

6. Durchflussregeleinrichtung nach einem der vorhergehenden Ansprüche, wobei eine mit einer gehäuseseitigen Ventilsitzfläche (44) zusammenwirkende ventilkörperseitige Ringstirnfläche (42) in Strömungsrichtung konisch erweitert ist.

7. Durchflussregeleinrichtung nach einem der vorhergehenden Ansprüche, wobei der Ventilabschnitt (4) mehrteilig ausgebildet ist und der Kanalauslauf (36) vom Kanaleinlauf (32) trennbar ist.

8. Durchflussregeleinrichtung nach einem der vorhergehenden Ansprüche, wobei die Durchflussregeleinrichtung 81) einen Leitungsabschnitt (2) mit einem festen Öffnungsquerschnitt hat, der parallel zum Ventilabschnitt (4) angeordnet ist.

9. Wasserspeicher, mit einer Durchflussregeleinrichtung (1) nach einem der vorhergehenden Ansprüche.

## Claims

1. Flow regulating device (1) having a valve section (4) for the controlled opening and closing of a flow channel, in which an elongated valve body (40) is displaceably guided in the longitudinal direction between a channel inlet (32) and a channel outlet (36), wherein the valve body (40) has a top section (48), a shaft (50) and a base section (52) in the flow direction, and wherein the valve body (40) is spring-biased in the closing direction, wherein a spring element (46) engages asymmetrically with the valve body (40) to generate the bias, wherein in the open position the valve body (40) can be deflected in the transverse direction against a stop (60), wherein the spring element (46) is a spiral spring which encompasses a shaft (50) of the valve body (40), **characterised in that** the spring element (46) abuts an annular surface (72) surrounding the channel outlet (36), wherein a spring contact surface (54) extends radially from the shaft (50) across a partial circumference and the shaft (50) is reduced in cross-section in an outer circumferential region (62) downstream of the spring contact surface (54).

2. Flow regulating device according to claim 1, wherein an inner housing chamber (34) accommodating the valve body (40) is cylindrical.

3. Flow regulating device according to claim 1 or 2, wherein the shaft (50) has a concave contact surface in its cross-section-reduced outer circumferential region (62).

4. Flow regulating device according to one of claims 1, 2 or 3, wherein the valve body (40) has a contact surface (58) which in the closed position is positioned at a maximum deflection angle to the stop (60).

5. Flow regulating device according to one of the preceding claims, wherein a valve seating area (44) on the housing side surrounding the channel inlet (30) is conically enlarged in the flow direction.

6. Flow regulating device according to one of the preceding claims, wherein an annular end face (42) on the valve body side which interacts with a valve seating area (44) on the housing side is conically enlarged in the flow direction.

7. Flow regulating device according to one of the preceding claims, wherein the valve section (4) is embodied in multiple parts and the channel outlet (36) can be separated from the channel inlet (32).

8. Flow regulating device according to one of the preceding claims, wherein the flow regulating device (81) has a line section (2) with a fixed opening cross-section which is arranged parallel to the valve section (4).

9. Water storage tank, having a flow regulating device (1) according to one of the preceding claims.

## Revendications

1. Dispositif de régulation de débit (1) comprenant une section de soupape (4) destinée à l'ouverture et à la fermeture d'un canal d'écoulement dans lequel un corps de soupape (40) oblong est guidé de manière déplaçable en direction longitudinale entre une entrée de canal (32) et une sortie de canal (36), le corps de soupape (40) ayant en direction d'écoulement une section de tête (48), une tige (50) et une section de pied (52), et le corps de soupape (40) étant précontraint par ressort dans le sens de fermeture, un élément à ressort (46) destiné à générer la précontrainte ayant prise de manière asymétrique sur le corps de soupape (40), le corps de soupape (40), en position d'ouverture, pouvant être dévié contre une butée (60), l'élément à ressort (46) étant un ressort hélicoïdal qui entoure une tige (50) du corps de soupape (40), **caractérisé en ce que** l'élément à ressort (46) s'appuie sur une surface annulaire (72) entourant la sortie de canal (36), une surface d'appui de ressort (54) s'étendant radialement de la tige (50) sur une circonférence partielle, et la tige (50) ayant une section transversale réduite dans une zone de circonférence extérieure (62) située en aval de la surface d'appui de ressort (54).

2. Dispositif de régulation de débit selon la revendication 1, un espace intérieur de boîtier (34) logeant le corps de soupape (40) étant cylindrique.

3. Dispositif de régulation de débit selon la revendication 1 ou 2, la tige (50) ayant une surface d'appui concave dans sa zone de circonférence extérieure (62) à section transversale réduite.

4. Dispositif de régulation de débit selon l'une quelconque des revendications 1, 2 ou 3, le corps de soupape (40) ayant une surface d'appui (58) qui, en position de fermeture, est placée pour butée (60) dans un angle de déviation maximal.

5. Dispositif de régulation de débit selon l'une quelconque des revendications précédentes, une surface de siège de soupape (44) entourant l'entrée de canal (30) côté boîtier étant coniquement élargie dans le sens d'écoulement.

6. Dispositif de régulation de débit selon l'une quelconque des revendications précédentes, une surface frontale annulaire (42) coopérant côté corps de soupape avec une surface de siège de soupape (44) côté boîtier étant coniquement élargie dans le sens d'écoulement.

7. Dispositif de régulation de débit selon l'une quelconque des revendications précédentes, la section de soupape (4) étant réalisée en plusieurs parties et la sortie de canal (36) étant séparable de l'entrée de canal (32).

8. Dispositif de régulation de débit selon l'une quelconque des revendications précédentes, le dispositif de régulation de débit (1) ayant une section de conduite (2) dotée d'une section transversale d'ouverture fixe qui est disposée parallèlement à la section de soupape (4).

9. Chauffe-eau comprenant un dispositif de régulation de débit (1) selon l'une quelconque des revendications précédentes.
